(19) **Europäisches Patentamt / European Patent Office / Office européen des brevets**

(11) **EP 4 436 086 A2**

(12) # EUROPEAN PATENT APPLICATION

(43) Date of publication:
**25.09.2024 Bulletin 2024/39**

(21) Application number: **24193207.8**

(22) Date of filing: **09.10.2020**

(51) International Patent Classification (IPC):
**H04L 5/00** *(2006.01)*

(52) Cooperative Patent Classification (CPC):
**H04L 5/005; H04L 5/0035; H04L 5/0053; H04L 5/0094; H04L 27/2601**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(62) Document number(s) of the earlier application(s) in accordance with Art. 76 EPC:
**20956524.1 / 4 205 471**

(71) Applicant: **Apple Inc.**
**Cupertino, CA 95014 (US)**

(72) Inventors:
• **ZHANG, Yushu**
  **Beijing, 10022 (CN)**
• **FAKOORIAN, Seyed Ali Akbar**
  **Cupertino, California, 95014 (US)**
• **YAO, Chunhai**
  **Beijing, 100022 (US)**
• **SUN, Haitong**
  **Cupertino, California, 95014 (US)**
• **ZENG, Wei**
  **Cupertino, California, 95014 (US)**
• **ZHANG, Dawei**
  **Cupertino, California, 95014 (US)**
• **HE, Hong**
  **Cupertino, California, 95014 (US)**
• **NIU, Huaning**
  **Cupertino, California, 95014 (US)**
• **YE, Sigen**
  **Cupertino, California, 95014 (US)**
• **YANG, Weidong**
  **Cupertino, California, 95014 (US)**
• **YE, Chunxuan**
  **Cupertino, California, 95014 (US)**
• **OTERI, Oghenekome**
  **Cupertino, California, 95014 (US)**

(74) Representative: **Simmons & Simmons**
**City Point**
**One Ropemaker Street**
**London EC2Y 9SS (GB)**

Remarks:
This application was filed on 06-08-2024 as a divisional application to the application mentioned under INID code 62.

(54) **RATE MATCHING FOR INTER-CELL MULTIPLE TRANSMIT-RECEIVE POINT OPERATION**

(57) The present application relates to devices and components including apparatus, systems, and methods to provide rate matching for inter-cell, multiple transmit-receive point operation in wireless communication systems.

Figure 1

EP 4 436 086 A2

**Description**

**BACKGROUND**

Release 16 of Third Generation Partnership Project (3GPP) provides intra-cell multiple transmit-receive point (TRP) operation supported with two modes. In single downlink control information (DCI)-mode, the gNB can schedule physical downlink shared channel (PDSCH) from two TRPs by a single DCI. In a multi-DCI mode, PDSCH from two TRPs may be scheduled by two DCIs.

**BRIEF DESCRIPTION OF THE DRAWINGS**

Figure 1 illustrates a network environment in accordance with some embodiments.

Figure 2 is a diagram that illustrates positioning of a synchronization signal block additional cell in accordance with some embodiments.

Figure 3 illustrates signal patterns in accordance with some embodiments.

Figure 4 illustrates other signal patterns in accordance with some embodiments.

Figure 5 illustrates an operational flow/algorithmic structure in accordance with some embodiments.

Figure 6 illustrates another operational flow/algorithmic structure in accordance with some embodiments.

Figure 7 illustrates another operational flow/algorithmic structure in accordance with some embodiments.

Figure 8 illustrates a user equipment in accordance with some embodiments.

Figure 9 illustrates a base station in accordance with some embodiments.

**DETAILED DESCRIPTION**

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

The following is a glossary of terms that may be used in this disclosure.

The term "circuitry" as used herein refers to, is part of, or includes hardware components such as an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, or the like. A "hardware resource" may refer to compute, storage, or network resources provided by physical hardware element(s). A "virtualized resource" may refer to compute, storage, or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, virtualized network function, or the like.

The term "information element" refers to a structural element containing one or more fields. The term "field" refers to individual contents of an information element, or a data element that contains content. An information element may include one or more additional information elements.

Release 17 of 3GPP enhances multi-DCI operation to support inter-cell operation. In inter-cell, multi-TRP operation, PDSCH can be transmitted from different cells with different cell identifiers. The PDSCH from different cells may be overlapped in time/frequency domain.

The physical layer processing of the PDSCH may include rate matching, which may follow channel coding. A rate matching function will receive an output from the channel coding and process each coded block separately. Rate matching may include a bit selection stage and a bit interleaving stage. The bit selection stage may reduce the number of channel coded bits to match a capacity of allocated resources. The bit interleaving may reorder the bit sequence.

In Release 16, PDSCH rate matching is provided such that physical resource blocks (PRBs) with synchronization signal blocks (SSBs) are not available for PDSCH in orthogonal frequency division multiplexing (OFDM) symbols where an SSB is transmitted. In Release 16, the SSB pattern is common for PDSCH from two TRPs. However, in the inter-cell operation of Release 17, SSB patterns in different cells may be different from one another. This may affect PDSCH rate matching in inter-cell, multi-TRP operation.

Embodiments of the present disclosure describe enhancements on PDSCH rate matching for inter-cell, multi-TRP operation in which different SSB patterns may be used in different cells. Aspects of described embodiments include physical cell identifier (ID) and control resource set (CORESET) pool index association, control signaling for SSB patterns in different cells, rate matching behavior for PDSCH from different cells, and other rate matching pattern enhancement for intra-cell multi-TRP operation. These aspects, or portions thereof, may be used in any combination.

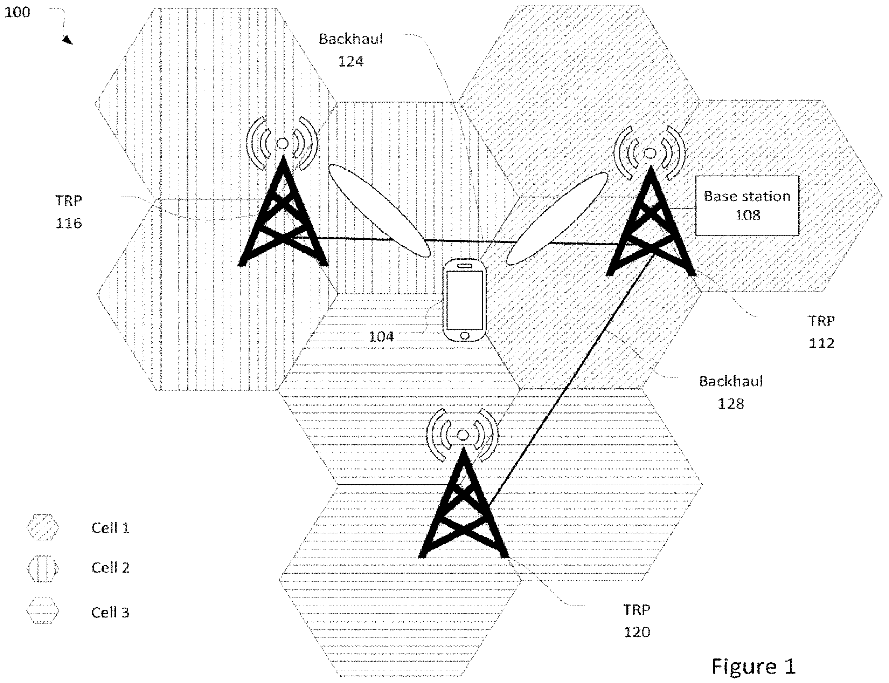

Figure 1 illustrates a network environment 100 in accordance with some embodiments. The network environment 100 may include a UE 104 and a base station 108. The base station 108 may provide one or more wireless access cells, for example, 3GPP New Radio "NR" cells, through which the UE 104 may communicate with the base station 108. The UE 104 and the base station 108 may communicate over an air interface compatible with 3GPP technical specifications such as those that define Fifth Generation (5G) NR system standards. The base station 108 may be a next-generation - radio access network (NG-RAN) node that is coupled with a 5G core network. An NG-RAN node may be either a gNB to provide an NR user plane and control plane protocol terminations toward the UE 104 or an ng-eNB to provide evolved universal terrestrial radio access (E-UTRA) user plane and control plane protocol terminations toward the UE 104.

The base station 108 may be coupled with one or more TRPs, for example, TRP 112, 116, and 120. In general, the base station 108 may perform the majority of the operations of a communication protocol stack, while the TRPs 112, 116, and 120 act as distributed antennas. In some embodiments, the TRPs 116 and 120 may perform some lower-level operations of the communication protocol stack (for example, analog physical (PHY) layer operations). The base station 108 may be locally coupled with TRP 112 and may communicate with TRPs 116 and 120 over respective backhauls 124 and 128. The backhauls 124 and 128 may be ideal or non-ideal backhauls.

The base station 108 may use the TRPs 112, 116, and 122 to geographically separate points at which a signal may be transmitted to, or received from, the UE 104. This may increase flexibility of using multiple-input, multiple-output and beamforming enhancements for communicating with the UE 104. The TRPs 116 and 120 may be used to transmit downlink transmissions to the UE 104 and receive uplink transmissions from the UE 104. In some embodiments, the distributed transmit/receive capabilities provided by the TRPs 116 and 120 may be used for coordinated multipoint or carrier aggregation systems.

In various embodiments, the base station 108 may operate in single-DCI mode or multi-DCI mode. In single-DCI mode, one TRP may transmit DCI to schedule PDSCH transmissions from a plurality of TRPs. For example, TRP 112 may transmit DCI to schedule a PDSCH from TRP 112 and a PDSCH from TRP 116. In a multi-DCI mode, each TRP may transmit its own DCI to schedule its own PDSCH transmissions. For example, TRP 112 may transmit a first DCI to schedule a first PDSCH from TRP 112 and TRP 116 may transmit a second DCI to schedule a second PDSCH from TRP 116.

The network environment 100 may represent an inter-cell, multi-TRP configuration with each of the TRPs 112, 116, and 122 configured to provide respective serving cells. For example, TRP 112 may provide cell 1, TRP 116 may provide cell 2, and TRP 120 may provide cell 3.

The base station 108 may provide transmission configuration indication (TCI) state information to the UE 104 to indicate quasi-co-location (QCL) relationships between antenna ports used for reference signals (for example, SSB or CSI-RS) and downlink data or control signaling, for example, PDSCH or PDCCH. The base station 108 may use a combination of RRC signaling, MAC control element signaling, and DCI, to inform the UE 104 of these QCL relationships.

Initially, the base station 108 may configure the UE 104 with a plurality of TCI states through RRC signaling. In some embodiments, up to 128 TCI states may be configured for PDSCH through, for example, a PDSCH-config information element, and up to 64 TCI states may be configured for PDCCH through, for example, a PDCCH-config information element. Each TCI state may include a physical cell ID, a bandwidth part identifier, an indication of the relevant SSB or CSI-RS, and an indication of the QCL type. 3GPP has specified four types of QCL to indicate which particular channel characteristics are shared. In QCL Type A, antenna ports share Doppler shift, Doppler spread, average delay, and delay spread. In QCL Type B, antenna ports share Doppler shift and Doppler spread are shared. In QCL Type C, antenna ports share Doppler shift and average delay. In QCL Type D, antenna ports share spatial receiver parameters.

The TCI states may be set as inactive after initial configuration. The base station 108 may then transmit an activation command through, for example, a MAC control element. The activation command may activate up to eight combinations of one or two TCI states that correspond to eight codepoints of a TCI field in DCI. One or more specific TCI states may then be dynamically selected and signaled using the TCI field in DCI to indicate which of the active TCI states are applicable to a PDSCH resource allocation.

The base station 108 may transmit PDCCH through one or more of the TRPs 112, 116, and 120 using resource elements that belong to a control resource set (CORESET). A search space configuration may refer to a particular CORESET to define a search space, for example, a specific set of resource blocks and symbols where the UE 104 is to attempt to decode the PDCCH. The base station 108 may configure up to three CORESETs for an active downlink bandwidth part of a serving cell. The CORESET may be configured by a ControlResourceSet information element that defines frequency domain resources to indicate resource blocks allocated to the CORESET, a duration to indicate a number of symbols allocated to the CORESET (which may be 1, 2, or 3 orthogonal frequency division multiplexing (OFDM) symbols), and QCL information to support a successful reception of the PDCCH.

The QCL information in the ControlResourceSet information element may be provided by listing identities of TCI states. The TCI states identified in the ControlResourceSet information element may be a subset of the TCI states defined in the PDSCH-config that are in the active downlink bandwidth part to which the CORESET belongs. If the ControlResourceSet information element only provides a single TCI state, the UE 104 may assume a QCL relationship between the PDCCH and reference signal specified by that TCI state. If a plurality of TCI states are listed, the UE 104 may rely on an activation command, such as that described above, to identify the TCI state to apply.

While the above-discussion describes the QCL information being communicated by transmitting indications of TCI states, QCL information may be conveyed in other ways as well. For example, in some embodiments, if there is no TCI state indication (or insufficient time to process the indication), the UE 104 may operate under default or implied assumptions of QCL information, for example, a particular downlink reference signal is QCL'd with another signal or port. Thus, various embodiments will refer to TCI/QCL states or indications thereof. As used herein, a TCI/QCL state may refer to a TCI state or another state associated with a QCL relationship. Further, while this description describes TCI/QCL states related to downlink communication, TCI/QCL states may also be applicable to uplink communication.

In some embodiments, the base station 108 may configure one or more CORESET pools to facilitate the use of multiple PDCCHs that may schedule transmissions in one or more of the cells of the network environment 100. The scheduled transmissions may be PDSCH transmissions, PUSCH transmissions, PUCCH transmissions, or aperiodic channel state information-reference signals (CSI-RSs). To configure the CORESET pools, the gNB 108 may include a CORESET pool index in the ControlResourceSet IE to associate the CORESET with a corresponding CORESET pool. In some embodiments, the gNB 108 may configure up to two different CORESET pools per serving cell.

The base station 108 may manage the CORESET configurations throughout the cells of network environment 100 to facilitate inter-cell, multi-TRP operation. For example, in some embodiments the base station 108 may be map different CORESET pool indices to different cell identities. This may prevent a TCI/QCL state indication associated with different physical cell identities (IDs) for CORESETs that share the same CORESET pool index.

For example, consider that a first plurality of TCI/QCL states are active in cell 1 (Cell_1 TCI/QCL states) and a second plurality of TCI/QCL states are active in cell 2 (Cell_2 TCI/QCL states). The base station 108 may dedicate one or more CORESET pools to the first cell (Cell_1 CORESET pools) and one or more CORESET pools to the second cell (Cell 2 CORESET pools). The base station 108 may ensure that all CORESETs associated with a Cell_1 CORESET pool are only associated with Cell_1 TCI/QCL states; and all CORESETs associated with a Cell_2 CORESET pool are only associated with Cell_2 TCI/QCL states.

If the base station 108 provides a QCL/TCI state indication associated with different physical cell IDs for CORESETs that share the same CORESET pool index, it may be considered an error case.

In other operation modes, for example, single-DCI mode or single-TRP mode, the active TCI/QCL states for an uplink/downlink channel may not be associated with different physical cell IDs.

Various embodiments may allow for two different types of scheduling with respect to intra-cell or inter-cell scheduling. In a first scheduling option, only intra-cell scheduling may be allowed. In a second scheduling option, inter-cell scheduling, which may also be referred to as cross-cell scheduling, may be allowed.

In the first scheduling option, both the TCI/QCL state of a scheduling PDCCH and the TCI/QCL state of the scheduled transmission are to be associated with the same physical cell ID. For example, consider a PDCCH transmission in cell 1 that schedules a transmission in cell 1. Both the PDCCH transmission and the scheduled transmission should be associated with a cell_1 TCI/QCL state. In this embodiment, it may be considered an error case if the PDCCH transmission is associated with a cell_1 TCI/QCL state and the scheduled transmission is associated with a cell_2 TCI/QCL state, or vice versa.

In the second scheduling option, the TCI/QCL state of a scheduling PDCCH may be associated with a different physical cell ID than the TCI/QCL state of the scheduled transmission. For example, consider a PDCCH transmission in cell 1 that schedules a transmission in cell 2. The PDCCH transmission may be associated with a cell_1 TCI/QCL state, while the scheduled transmission is associated with a cell_2 TCI/QCL state.

In some embodiments, the UE 104 may transmit capability signaling to indicate whether it supports a case of "different cell ID." If the UE 104 supports the different cell ID, the base station 108 may use inter-cell scheduling or intra-cell scheduling as desired. If the UE 104 does not support the different cell ID, the base station 108 may use intra-cell scheduling.

The TRPs may transmit SSBs to facilitate cell-search procedures. For example, the UE 104 may scan a frequency bandwidth to detect synchronization signals in an SSB. The UE 104 may then decode a physical broadcast channel (PBCH) of the SSB to detect initial system information in a master information block (MIB) and information regarding additional system information (for example, system information block 1 (SIB1) that may be transmitted on the PDSCH. The SSB may also be used for signal measurements such as, but not limited to, reference signal receive power (RSRP), reference signal receive quality (RSRQ), and signal-to-interference plus noise ratio (SINR). An SSB may occupy 20 resource blocks in the frequency domain and four symbols in the time domain.

One or more SSBs may be transmitted in an SSB burst to facilitate beamforming and beam sweeping. For example, a plurality of SSBs of a burst may be allocated to different beams and sequentially transmitted. The UE 104 and base station 108 may determine the desired beams based on UE measurements of the SSBs.

In some embodiments, the base station 108 may provide the UE 104 with information from neighbor-cell SSB patterns. The UE 104 may use this information for rate-matching neighbor-cell PDSCH around the SSB. The base station 108 may provide this information using higher-layer signaling such as, but not limited to, RRC signaling.

In one example, a new RRC parameter ssb-PositionsInBurst1 can be configured by RRC signaling to indicate the SSB location from the neighbor cell for multi-TRP operation. This parameter provides the time domain location for each SSB in a burst. The parameter may be included in a PDSCH configuration IE as follows.

```
PDSCH-Config ::=          SEQUENCE {
    dataScramblingIdentityPDSCH      INTEGER (0..1023)   OPTIONAL, -- Need S

    ...

    rateMatchPatternToAddModList SEQUENCE (SIZE (1..maxNrofRateMatchPatterns))
                                OF RateMatchPattern      OPTIONAL, -- Need N
    rateMatchPatternToReleaseList  SEQUENCE (SIZE (1..maxNrofRateMatchPatterns))
                                OF RateMatchPatternId    OPTIONAL, -- Need N
    rateMatchPatternGroup1      RateMatchPatternGroup    OPTIONAL, -- Need R
    rateMatchPatternGroup2      RateMatchPatternGroup    OPTIONAL, -- Need R
    ...dataScramblingIdentityPDSCH2 Integer (0 .. 1023)          OPTIONAL, -- Need R
    pdsch-TimeDomaininAllocationList SetupRelease {PDSCH-
                            TimeDomaininResourceAllocationList}   OPTIONAL, -- Need M
    repetitionSchemeConfig          SetupRelease { RepetitionSchemeConfig}

                                                          OPTIONAL, --Need M
    ssb-PositionsInBurst1       CHOICE {
        shortBitmap                 BIT STRING (SIZE (4)),
        mediumBitmap                BIT STRING (SIZE (8)),
        longBitmap                  BIT STRING (SIZE (64)),
    }                                                     OPTIONAL
}
RateMatchPatternGroup ::=       SEQUENCE (1..maxNrofRateMatchPatternsPerGroup))
                                OF CHOICE {
        celllevel                   RateMatchPatternId
        bwplevel                    RateMatchPatternId
}
```

The bitmaps in ssb-PositionsInBurst1 may explicitly indicate whether SSBs in a neighbor cell are active. For example, the base station 108 may transmit the PDSCH-config IE in cell 1 (using TRP 112) and the bitmap may indicate whether SSBs in cell 2 (transmitted by TRP 116) are active.

In frequency domain, the frequency location for all SSBs in a SSB burst from a neighbor cell can be detected based on blind detection, and the absolute frequency location of SSB can be determined using one of the following two options.

In a first option, RRC parameters offsetToPointA1 or absoluteFrequencyPointA1 may be used to calculate the absolute resource blocks for neighbor cell resource blocks.

The offsetToPointA1 may be provided in a PDSCH configuration IE as follows.

```
PDSCH-Config ::=              SEQUENCE {

    dataScramblingIdentityPDSCH       INTEGER (0..1023)   OPTIONAL, -- Need S

    ...

    rateMatchPatternToAddModList SEQUENCE (SIZE (1..maxNrofRateMatchPatterns))
                            OF RateMatchPattern       OPTIONAL, -- Need N
    rateMatchPatternToReleaseList  SEQUENCE (SIZE (1..maxNrofRateMatchPatterns))
                            OF RateMatchPatternId    OPTIONAL, -- Need N
    rateMatchPatternGroup1       RateMatchPatternGroup    OPTIONAL, -- Need R

    rateMatchPatternGroup2       RateMatchPatternGroup    OPTIONAL, -- Need R
    ...dataScramblingIdentityPDSCH2 Integer (0 .. 1023)        OPTIONAL, -- Need R
    pdsch-TimeDomaininAllocationList SetupRelease {PDSCH-
                    TimeDomaininResourceAllocationList}  OPTIONAL, -- Need M
    repetitionSchemeConfig       SetupRelease { RepetitionSchemeConfig}
                                    OPTIONAL, --Need M
    offsetToPointA1              INTEGER (0 .. 2199),    OPTIONAL

    }
```

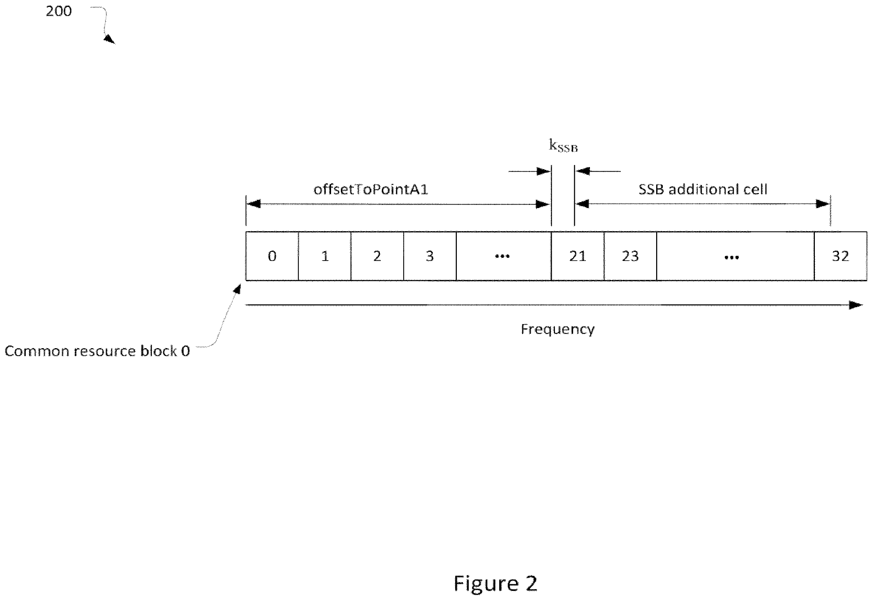

Figure 2 is diagram 200 that illustrates positioning of an SSB additional cell 204 in the frequency domain in accordance with some embodiments. The SSB additional cell 204 may be an SSB from cell other than the cell in which the configuration element is transmitted (for example, a neighbor cell).

The offsetToPointA1 value provide a resource block offset between a common resource block 0 and a common resource block that overlaps with the start of the SSB additional cell 204, shown as common resource block 21 in Figure 2. A subcarrier offset, $k_{SSB}$, may be an offset from subcarrier 0 of the common resource block identified by offsetToPointA1, for example common resource block 21, to subcarrier 0 of the SSB additional cell 204. The subcarrier offset, $k_{SSB}$, may be provided by the MIB.

Alternatively, the frequency location of the neighbor cell SSB may be specified using a pair of absolute frequencies. For example, a bandwidth indicator, absoluteFrequencyPointA1, may indicate a position of a channel bandwidth that includes the SSB using a first NR-absolute radio-frequency channel number (ARFCN); and an SSB indicator, absoluteFrequencySSB1, may indicate the position of the SSB within the channel bandwidth using a second ARFCN.

A second option for determining a frequency location of the SSB may be by the UE 104 assuming the common resource block 0 is the same for both cells. Thus, the UE 104 may determine specific frequency location for neighbor cell SSB based on RRC parameters that configure serving cell SSB.

Different cells may use different rate matching patterns with regards to different configurations. Therefore, some embodiments describe control signaling for other rate matching patterns. In some embodiments, the PDSCH configuration IE may be updated to include RRC parameters that provide additional rate matching patterns for neighbor cells. For example, the PDSCH configuration IE may be as follows.

```
PDSCH-Config ::=              SEQUENCE {
     dataScramblingIdentityPDSCH       INTEGER (0..1023)   OPTIONAL, -- Need S

     ...

     rateMatchPatternToAddModList SEQUENCE (SIZE (1..maxNrofRateMatchPatterns))
                                 OF RateMatchPattern        OPTIONAL, -- Need N
     rateMatchPatternToReleaseList  SEQUENCE (SIZE (1..maxNrofRateMatchPatterns))
                                 OF RateMatchPatternId    OPTIONAL, -- Need N
     rateMatchPatternGroup1          RateMatchPatternGroup    OPTIONAL, -- Need R
     rateMatchPatternGroup2          RateMatchPatternGroup    OPTIONAL, -- Need R

     ...

     dataScramblingIdentityPDSCH2  Integer (0 .. 1023)          OPTIONAL, -- Need R
     pdsch-TimeDomaininAllocationList SetupRelease {PDSCH-
                    TimeDomaininResourceAllocationList}   OPTIONAL, -- Need M
     repetitionSchemeConfig        SetupRelease { RepetitionSchemeConfig}
                                                      OPTIONAL, --Need M
     rateMatchPatternGroup3        RateMatchPatternGroup    OPTIONAL, -- Need R
     rateMatchPatternGroup4        RateMatchPatternGroup    OPTIONAL, -- Need R
                                                      OPTIONAL
     }
RateMatchPatternGroup ::=         SEQUENCE (1..maxNrofRateMatchPatternsPerGroup))
                                 OF CHOICE {
          celllevel               RateMatchPatternId
          bwplevel                RateMatchPatternId
     }
```

Rate matching patterns may be resource patterns around which the UE 104 is to rate match the PDSCH. Higher-layer signaling, such as the PDSCH configuration IE above, may configure the UE 104 with parameters that indicate which resource elements are not available for the PDSCH. In the above PDSCH configuration IE, rate match pattern group 3 and rate match in group 4 are added to correspond to one or more neighbor cells. For example, the base station 108 may cause the PDSCH configuration IE to be transmitted in cell 1 by TRP 112, while the rate match pattern groups 3 and 4 correspond to cell 2 or cell 3. A DCI format that schedules PDSCH, for example DCI format 1_1, may then include a field matching pattern indicator for PDSCH corresponding to the neighbor cell based on rate match pattern group 3 or rate match pattern group 4.

Except as otherwise described herein, rate matching of the PDSCH based on rate match patterns may be consistent with description in clause 5.1.4.1 of 3GPP TS 38.214 v16.3.0 (2020-09).

Various embodiments may provide the following options for PDSCH rate matching for inter-cell multi-TRP operation.

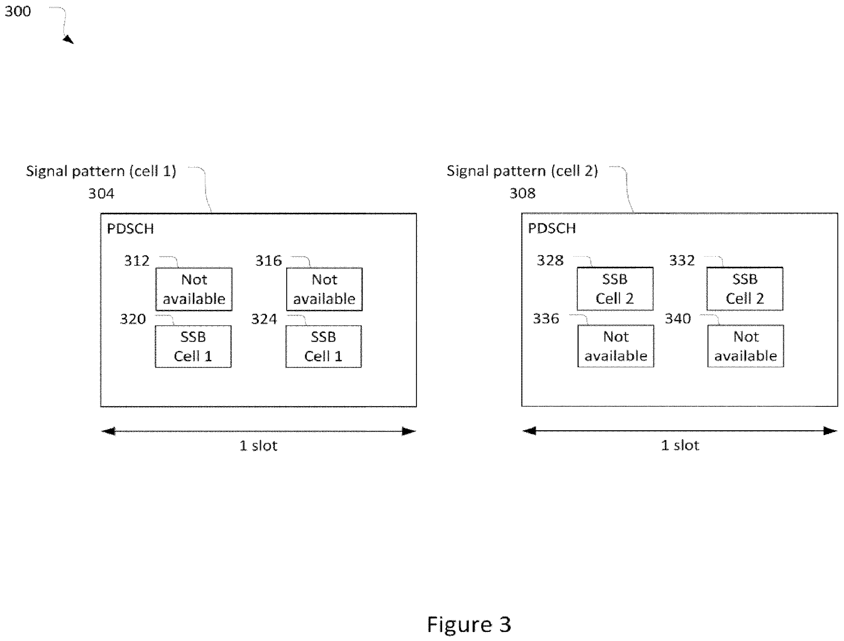

Figure 3 illustrates signal patterns 300 depicting a first option (option 1) for PDSCH rate matching for inter-cell multi-TRP operation in accordance with some embodiments. The signal patterns 300 depict PDSCH associated with both cells (for example, cell 1 and cell 2) sharing the same rate matching pattern. That is, each signal pattern 304 and 308 may include the same four regions around which the PDSCH may be mapped.

In particular, the signal pattern 304 for cell 1 indicates four regions 312, 316, 320, and 324 that are not available for the PDSCH. First region 312 and second region 316 may not be available because they correspond to areas in which the SSBs are transmitted in cell 2. Third region 320 and fourth region 324 may not be available because they correspond to areas in which the SSBs are transmitted in cell 1.

Similarly, the signal pattern 308 for cell 2 indicates four regions 328, 332, 336, and 340 that are not available for the PDSCH. First region 328 and second region 332 may not be available because they correspond to areas in which the SSBs are transmitted in cell 2. Third region 336 and fourth region 340 may not be available because they correspond to areas in which the SSBs are transmitted in cell 1. Thus, in option 1, all PRBs for SSBs from both cells are assumed as "not available."

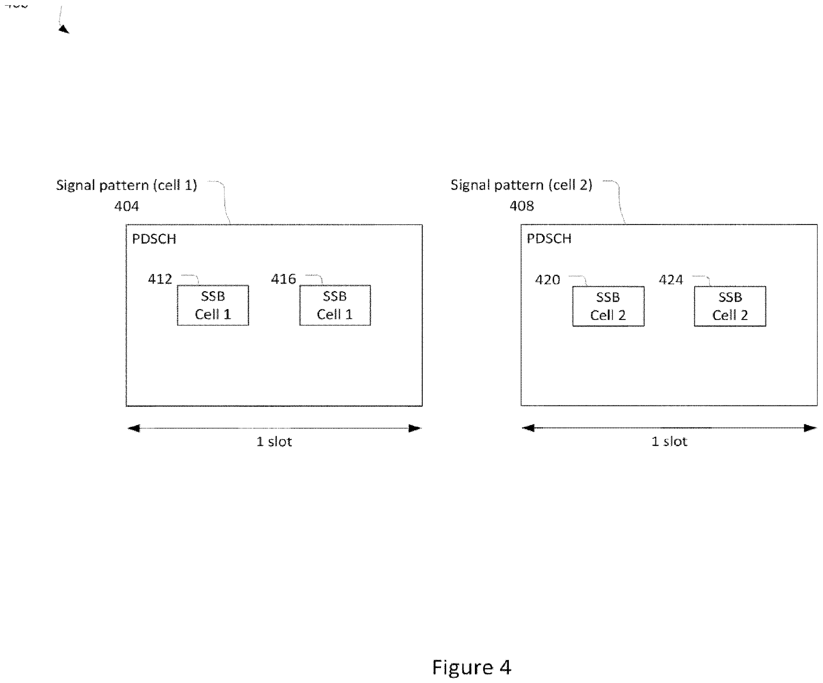

Figure 4 illustrates signal patterns 400 depicting a second option (option 2) for PDSCH rate matching for inter-cell mult-TRP operation in accordance with some embodiments. The signal patterns 400 depict PDSCH associated with both cells (for example, cell 1 and cell 2) based on independent rate matching patterns. That is, each signal pattern 404 and 408 may include different regions around which the PDSCH may be mapped.

In particular, the signal pattern 404 for cell 1 indicates two regions 412 and 416 that are not available for the PDSCH. First region 412 and second region 416 may not be available because they correspond to areas in which the SSBs are transmitted in cell 1. Similarly, the signal pattern 408 for cell 2 indicates two regions 420 and 424 that are not available for the PDSCH. First region 420 and second region 424 may not be available because they correspond to areas in which the SSBs are transmitted in cell 2. Thus, for a PDSCH from a cell, only PRBs for SSBs from the same cell are assumed as "not available."

In some embodiments, the base station 108 may configure the UE 104 to use either option 1 as described in Figure 3 or option 2 as described in Figure 4. This configuration may be by RRC or some other control signaling. In some embodiments, whether the UE 104 is to use either option 1 or option 2 may be based on UE capability. For example, the UE 104 may indicate whether it is capable of utilizing independent rate matching patterns. If the UE 104 is capable of using these independent rate matching patterns, the base station 108 may have the flexibility to configure the UE 104 with either option 1 or option 2. Else, the base station 108 may configure the UE 104 (either explicitly or implicitly) with option 1. In some embodiments, option 1 may be considered the default configuration.

In various embodiments, the options discussed above with respect to Figures 3 and 4 above can also be extended to other rate matching patterns.

Physical layer processing includes the scrambling of codewords transmitted on the physical channels. The scrambling may be based on a scrambling identifier, $n_{ID}$. In Release 16, the default value of $n_{ID}$ is defined as physical cell ID in clause 7.3.1.1 of 3GPP TS 38.211 v16.3.0 (2020-10-01). In order to address multi-TRP operation in the network environment 100 with different cell identities, the definition of scrambling identity for signal generation may be updated as follows in accordance with some embodiments.

In some embodiments, a default scrambling identifier may be determined using one of the following options. A default scrambling ID, as used herein, may be a scrambling ID to be used if a higher-layer signal does not provide parameters, for example, dataScramblingIdentityPDSCH or additionalDataScramblingIdentityPDSCH, to explicitly configure a scrambling ID, which may be referred to as virtual cell ID.

In a first option, the default scrambling ID may be selected based on the physical cell ID associated with the transmission. For example, if the scrambling ID is not explicitly configured for a PDSCH it may be set to a physical cell ID in a TCI/QCL state that is associated with the PDSCH. So, for example, if a PDSCH is scheduled in cell 2, the default scrambling ID may be the physical cell ID of cell 2, even if the DCI that schedules the PDSCH is transmitted in cell 1.

In a second option, the scrambling ID may be selected based on a physical cell ID configured by a physical cell ID, physCellId, indicated in a common serving cell configuration, servingCellConfigCommon. Thus, in some embodiments, regardless of whether virtual cell ID is configured, the UE 104 may continue to use the physical cell ID to calculate the scrambling ID.

The options of configuring the default scrambling identifier may be applied to physical layer processing of a number of different signals. For example, the default scrambling identifier may be used for transmitting PDSCH, PDCCH, DMRS, CSI-RS, PUCCH, PUSCH, or SRS.

Various embodiments may provide physical layer processing modifications that may be used to transmit/receive reference signals in the network environment 100. To transmit a reference signal, for example a PDSCH/PUSCH DMRS, CSI-RS, or SRS, a transmitting node may first generate a sequence and then map the sequence to physical resources. The mapping of the generated sequence to the physical resources may rely on common resource blocks defined in a physical cell. As discussed above, inter-cell, multi-TRP operation that may occur in the network environment 100 may include different common resource blocks for different cells. To address these situations, some embodiments include mapping a generated reference signal sequence to the common resource blocks corresponding to a physical cell associated with the signal. Some mapping definition updates may be made as follows.

The definition of mapping a PDSCH DMRS sequence to physical resources in clause 7.4.1.1.2 of 3GPP TS 38.211 v16.3.0 (2020-09) may be updated to recite that the PDSCH DMRS sequence is to be mapped to resource elements within common resource blocks allocated for PDSCH transmission in the same cell associated with the TCI/QCL of the PDSCH.

The definition of mapping a CSI-RS sequence to physical resources in clause 7.4.1.5.3 of 3GPP TS 38.211 may be updated to read that the reference point for k = 0 is subcarrier 0 in common resource block 0 in same cell associated with the TCI/QCL of the CSI-RS.

The definition of mapping a PUSCH DMRS sequence to physical resources in clause 6.4.1.1.3 of 3GPP TS 38.211 may be updated to recited that the PUSCH DMRS sequence is to be mapped to resource elements within common resource blocks allocated for PUSCH transmission in the same cell associated with the TCI/QCL of the PUSCH.

The definition of mapping an SRS sequence to physical resources in clause 6.4.1.4.3 of 3GPP TS 38.211 may be updated to recited that if $N_{BWP}^{start} \leq n_{shift}$ the reference point for $k_0^{(p_i)} = 0$ is subcarrier 0 in common resource block 0 in the same cell associated with the TCI of the SRS, otherwise the reference point is the lowest subcarrier of the BWP; where $N_{BWP}^{start}$ is a start of a bandwidth part, $n_{shift}$ is a frequency domain shift value, and $k_0^{(p_i)}$ is the frequency-domain starting position.

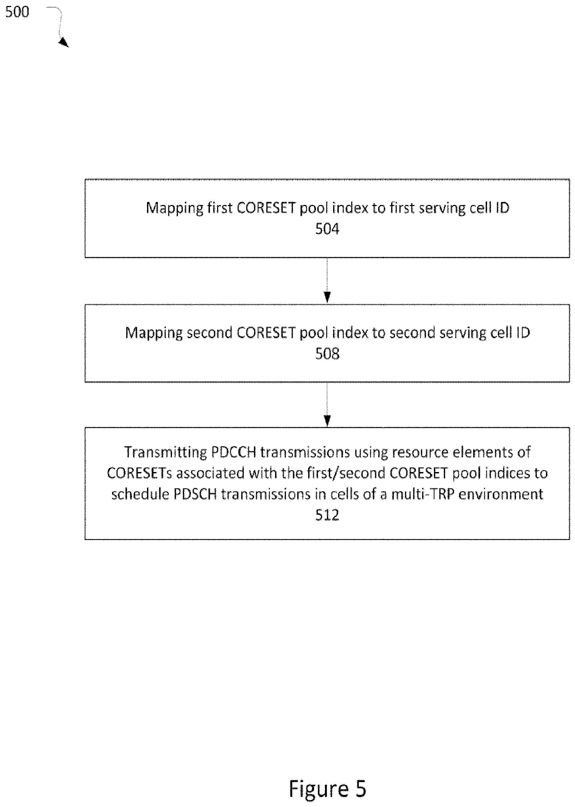

Figure 5 may include an operation flow/algorithmic structure 500 in accordance with some embodiments. The operation flow/algorithmic structure 500 may be performed or implemented by a base station such as, for example, base station 108 or gNB 900; or components thereof, for example, baseband processor 904A.

The operation flow/algorithmic structure 500 may include, at 504, mapping a first CORESET pool index to a first serving cell ID. The first CORESET pool index may correspond to a first CORESET pool and the first serving cell ID may correspond to a first serving cell of a plurality of serving cells of an inter-cell, multi-TRP environment such as network environment 100

The operation flow/algorithmic structure 500 may further include, at 508, mapping a second CORESET pool index to a second serving cell ID. The second CORESET pool index may correspond to a second CORESET pool and the second serving cell ID may correspond to a second serving cell of the plurality of serving cells.

The operation flow/algorithmic structure 500 may further include, at 512, transmitting PDCCH transmissions using resource elements of CORESETs associated with the first/second CORESET pool indices to schedule PDSCH transmissions in cells of the multi-TRP environment.

This mapping may facilitate inter-cell, multi-TRP operation among the plurality of serving cells by ensuring that different CORESET pool indices are mapped to different cell identities. In particular, having the CORESET pool indexes mapped to different serving cell IDs as described herein may ensure that a base station does not provide a TCI/QCL state indication associated with different physical cell identifiers for CORESETs that share the same CORESET pool index. Thus, reference signals associated with different physical cell identities cannot be configured with the same CORESET pool index.

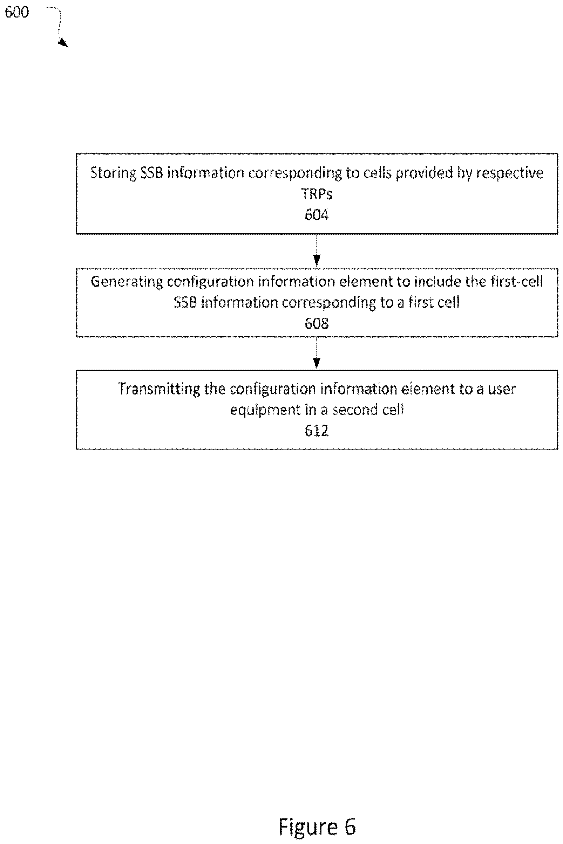

Figure 6 may include an operation flow/algorithmic structure 600 in accordance with some embodiments. The operation flow/algorithmic structure 600 may be performed or implemented by a base station such as, for example, base station 108 or gNB 900; or components thereof, for example, baseband processor 904A.

The operation flow/algorithmic structure 600 may include, at 604, storing SSB information corresponding to cells provided by respective TRPs. In some embodiments, the controlling base station may store SSB information for a plurality of serving cells in an inter-cell, multi-TRP environment such as networking environment 100.

The operation flow/algorithmic structure 600 may further include, at 608, generating configuration information element to include SSB information that corresponds to a first cell of the plurality of cells.

The operation flow/algorithmic structure 600 may further include, at 612, transmitting the configuration information element to a UE in a second cell. The first and second cells may be considered neighbor cells in the inter-cell, multi-TRP environment. The base station may distribute SSB information among a plurality of cells in order to facilitate PDSCH rate matching as described herein.

In some embodiments, the SSB information may be information to facilitate a UE's location of the SSB in the time-domain or the frequency-domain. For example, the SSB information may include a parameter to provide: time-domain location for each SSB in a burst (for example, ssb-positionsInBurst bitmap); frequency-domain location for SSBs in an SSB burst (for example, offsetToPointA1, kSSB, absoluteFrequencyPointA1, or absoluteFrequencySSB1 parameters); rate matching pattern or group information.

In this manner, the UE may be able to determine PDSCH rate matching information to facilitate PDSCH reception throughout the inter-cell, multi-TRP environment.

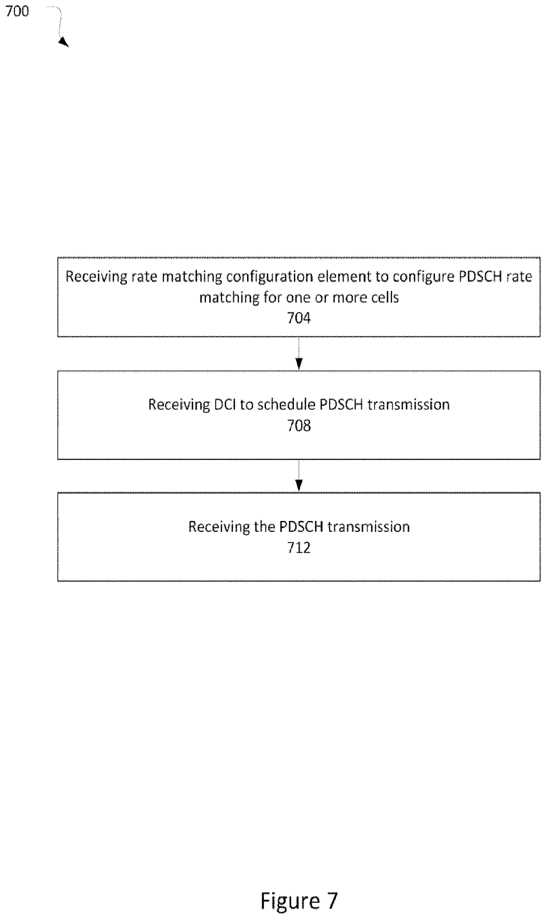

Figure 7 may include an operation flow/algorithmic structure 700 in accordance with some embodiments. In some embodiments, the operation flow/algorithmic structure 700 may be performed or implemented by a UE, for example, UE 104 or 800; or components thereof, for example, baseband processor 804A.

The operation flow/algorithmic structure 700 may include, at 704, receiving rate matching configuration element to configure PDSCH rate matching for one or more cells. In some embodiments, the PDSCH rate matching may be configured for a plurality of serving cells of an inter-cell, multi-TRP environment. The PDSCH rate matching may be configured by transmitting SSB information or other rate matching configuration information. In some embodiments, the PDSCH rate matching may be configured by SSB information such as that described with respect to Figure 6 or elsewhere herein.

The operation flow/algorithmic structure 700 may further include, at 708, receiving DCI to schedule PDSCH transmission. In various embodiments, the DCI may be transmitted in the same cell in which the PDSCH transmission is scheduled. In other embodiments, the DCI may be transmitted in a different cell from the PDSCH transmission.

The operation flow/algorithmic structure 700 may further include, at 712, receiving the PDSCH transmission. The UE may receive the PDSCH transmission based on the rate matching information configured at 704.

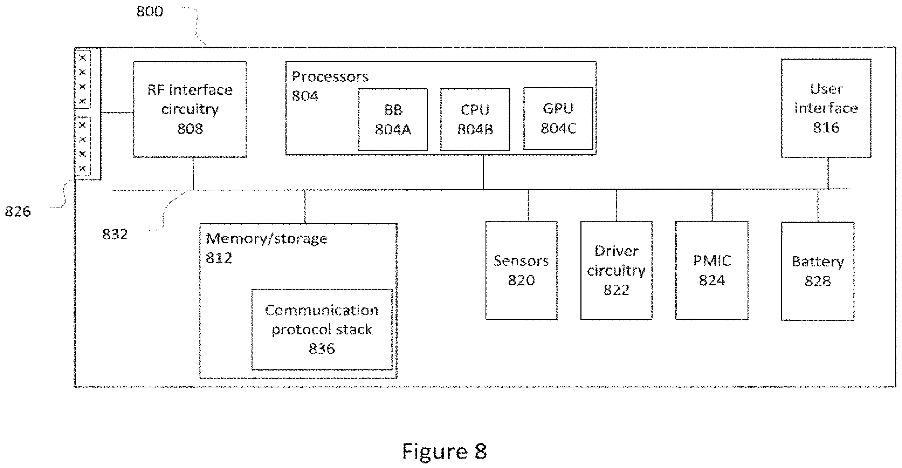

Figure 8 illustrates a UE 800 in accordance with some embodiments. The UE 800 may be similar to and substantially interchangeable with UE 104 of Figure 1.

The UE 800 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, actuators, etc.), video surveillance/monitoring devices (for example, cameras, video cameras, etc.), wearable devices (for example, a smart watch), relaxed-IoT devices. In some embodiments, the UE may be a RedCap UE or NR-Light UE.

The UE 800 may include processors 804, RF interface circuitry 808, memory/storage 812, user interface 816, sensors 820, driver circuitry 822, power management integrated circuit (PMIC) 824, antenna structure 826, and battery 828. The components of the UE 800 may be implemented as integrated circuits (ICs), portions thereof, discrete electronic devices, or other modules, logic, hardware, software, firmware, or a combination thereof. The block diagram of Figure 8 is intended to show a high-level view of some of the components of the UE 800. However, some of the components shown may be omitted, additional components may be present, and different arrangement of the components shown may occur in other implementations.

The components of the UE 800 may be coupled with various other components over one or more interconnects 832, which may represent any type of interface, input/output, bus (local, system, or expansion), transmission line, trace, optical connection, etc. that allows various circuit components (on common or different chips or chipsets) to interact with one another.

The processors 804 may include processor circuitry such as, for example, baseband processor circuitry (BB) 804A, central processor unit circuitry (CPU) 804B, and graphics processor unit circuitry (GPU) 804C. The processors 804 may include any type of circuitry or processor circuitry that executes or otherwise operates computer-executable instructions, such as program code, software modules, or functional processes from memory/storage 812 to cause the UE 800 to perform operations as described herein.

In some embodiments, the baseband processor circuitry 804A may access a communication protocol stack 836 in the memory/storage 812 to communicate over a 3GPP compatible network. In general, the baseband processor circuitry 804A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum layer. In some embodiments, the PHY layer operations may additionally/alternatively be performed by the components of the RF interface circuitry 808.

The baseband processor circuitry 804A may generate or process baseband signals or waveforms that carry information in 3GPP-compatible networks. In some embodiments, the waveforms for NR may be based cyclic prefix OFDM "CP-OFDM" in the uplink or downlink, and discrete Fourier transform spread OFDM "DFT-S-OFDM" in the uplink.

The memory/storage 812 may include one or more non-transitory, computer-readable media that includes instructions (for example, communication protocol stack 836) that may be executed by one or more of the processors 804 to cause the UE 800 to perform various operations described herein. The memory/storage 812 include any type of volatile or non-volatile memory that may be distributed throughout the UE 800. In some embodiments, some of the memory/storage 812 may be located on the processors 804 themselves (for example, L1 and L2 cache), while other memory/storage 812 is external to the processors 804 but accessible thereto via a memory interface. The memory/storage 812 may include any suitable volatile or non-volatile memory such as, but not limited to, dynamic random access memory (DRAM), static random access memory (SRAM), eraseable programmable read only memory (EPROM), electrically eraseable programmable read only memory (EEPROM), Flash memory, solid-state memory, or any other type of memory device technology.

The RF interface circuitry 808 may include transceiver circuitry and radio frequency front module (RFEM) that allows the UE 800 to communicate with other devices over a radio access network. The RF interface circuitry 808 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna structure 826 and proceed to filter and amplify (with a low-noise amplifier) the signal. The signal may be provided to a receiver of the transceiver that down-converts the RF signal into a baseband signal that is provided to the baseband processor of the processors 804.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 826.

In various embodiments, the RF interface circuitry 808 may be configured to transmit/receive signals in a manner compatible with NR access technologies.

The antenna 826 may include antenna elements to convert electrical signals into radio waves to travel through the air and to convert received radio waves into electrical signals. The antenna elements may be arranged into one or more antenna panels. The antenna 826 may have antenna panels that are omnidirectional, directional, or a combination thereof to enable beamforming and multiple input, multiple output communications. The antenna 826 may include microstrip antennas, printed antennas fabricated on the surface of one or more printed circuit boards, patch antennas, phased array antennas, etc. The antenna 826 may have one or more panels designed for specific frequency bands including bands in FR1 or FR2.

The user interface circuitry 816 includes various input/output (I/O) devices designed to enable user interaction with the UE 800. The user interface 816 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs, or more complex outputs such as display devices or touchscreens (for example, liquid crystal displays "LCDs," LED displays, quantum dot displays, projectors, etc.), with the output of characters, graphics, multimedia objects, and the like being generated or produced from the operation of the UE 1100.

The sensors 820 may include devices, modules, or subsystems whose purpose is to detect events or changes in its environment and send the information (sensor data) about the detected events to some other device, module, subsystem, etc. Examples of such sensors include, *inter alia*, inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 822 may include software and hardware elements that operate to control particular devices that are embedded in the UE 800, attached to the UE 1100, or otherwise communicatively coupled with the UE 800. The driver circuitry 822 may include individual drivers allowing other components to interact with or control various input/output (I/O) devices that may be present within, or connected to, the UE 800. For example, driver circuitry 822 may include a display driver to control and allow access to a display device, a touchscreen driver to control and allow access to a touchscreen interface, sensor drivers to obtain sensor readings of sensor circuitry 820 and control and allow access to sensor circuitry 820, drivers to obtain actuator positions of electro-mechanic components or control and allow access to the electro-mechanic components, a camera driver to control and allow access to an embedded image capture device, audio drivers to control and allow access to one or more audio devices.

The PMIC 824 may manage power provided to various components of the UE 800. In particular, with respect to the processors 804, the PMIC 824 may control power-source selection, voltage scaling, battery charging, or DC-to-DC conversion.

In some embodiments, the PMIC 824 may control, or otherwise be part of, various power saving mechanisms of the UE 800. For example, if the platform UE is in an RRC_Connected state, where it is still connected to the RAN node as it expects to receive traffic shortly, then it may enter a state known as Discontinuous Reception Mode (DRX) after a period of inactivity. During this state, the UE 800 may power down for brief intervals of time and thus save power. If there is no data traffic activity for an extended period of time, then the UE 800 may transition off to an RRC_Idle state, where it disconnects from the network and does not perform operations such as channel quality feedback, handover, etc. The UE 800 goes into a very low power state and it performs paging where again it periodically wakes up to listen to the network and then powers down again. The UE 800 may not receive data in this state; in order to receive data, it must transition back to RRC_Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery 828 may power the UE 800, although in some examples the UE 800 may be mounted deployed in a fixed location, and may have a power supply coupled to an electrical grid. The battery 828 may be a lithium ion battery, a metal-air battery, such as a zinc-air battery, an aluminum-air battery, a lithium-air battery, and the like. In some implementations, such as in vehicle-based applications, the battery 828 may be a typical lead-acid automotive battery.

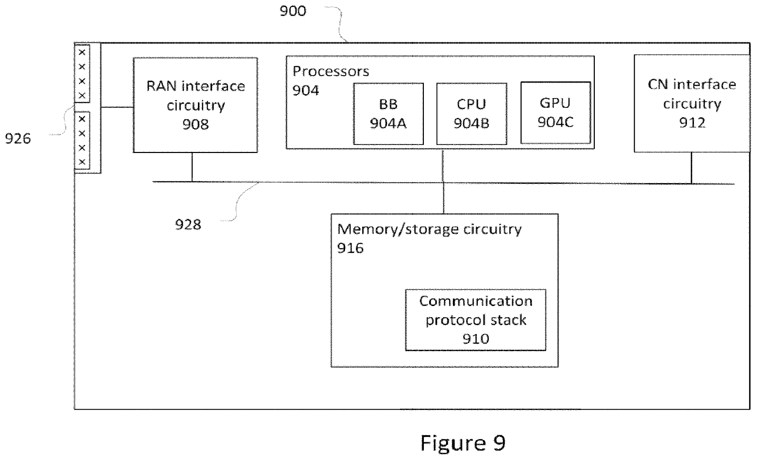

Figure 9 illustrates a gNB 900 in accordance with some embodiments. The gNB node 900 may similar to and substantially interchangeable with base station 108 of Figure 1.

The gNB 900 may include processors 904, RF interface circuitry 908, core network "CN" interface circuitry 912, memory/storage circuitry 916, and antenna structure 926.

The components of the gNB 900 may be coupled with various other components over one or more interconnects 928.

The processors 904, RF interface circuitry 908, memory/storage circuitry 916 (including communication protocol stack 910), antenna structure 926, and interconnects 928 may be similar to like-named elements shown and described with respect to Figure 7.

The CN interface circuitry 912 may provide connectivity to a core network, for example, a 5th Generation Core network "5GC" using a 5GC-compatible network interface protocol such as carrier Ethernet protocols, or some other suitable protocol. Network connectivity may be provided to/from the gNB 900 via a fiber optic or wireless backhaul. The CN interface circuitry 912 may include one or more dedicated processors or FPGAs to communicate using one or more of the aforementioned protocols. In some implementations, the CN interface circuitry 912 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

Examples

In the following sections, further exemplary embodiments are provided.

Example 1 includes a method comprising: mapping a first control resource set (CORESET) pool index that is associated with a first CORESET pool to a first serving cell identifier (ID) that is associated with a first serving cell; mapping a second CORESET pool index that is associated with a second CORESET pool to a second serving cell ID that is associated with a second serving cell; and transmitting, to a user equipment (UE), a first physical downlink control channel (PDCCH) transmission using resource elements of a first CORESET from the first CORESET pool to schedule a first transmission in the first serving cell or the second serving cell, the first transmission to include a physical downlink shared channel (PDSCH) transmission, a physical uplink shared channel (PUSCH) transmission, a physical uplink control channel (PUCCH) transmission, or an aperiodic channel state information-reference signal (CSI-RS).

Example 2 includes the method of example 1 or some other example herein, wherein the PDCCH transmission is a first PDCCH transmission to schedule the first transmission in the first serving cell; and the method further comprises: transmitting, to the UE, a second PDCCH transmission using resource elements of a second CORSET from the second CORESET pool to schedule a second transmission in the second serving cell.

Example 3 includes the method of example 1 or some other example herein, wherein both a first transmission configuration indication (TCI)/quasi-co-location (QCL) state of the first transmission and a second TCI/QCL state of the first PDCCH transmission are associated with the first serving cell.

Example 4 includes the method of example 1 or some other example herein, wherein the PDCCH transmission is to schedule the first transmission in the second serving cell, wherein a first transmission configuration indication (TCI)/quasi-co-location (QCL) state of the first transmission is associated with the second serving cell.

Example 5 includes the method of example 4 some other example herein, further comprising receiving, from the UE, a capability indication to indicate that the UE is capable of processing cross-cell scheduled downlink transmissions.

Example 6 includes a method of operating a base station, the method comprising: storing synchronization signal block (SSB) information corresponding to a plurality of cells provided by a respective plurality of transmit-receive points (TRPs), the SSB information to include first-cell SSB information corresponding to a first cell of the plurality of cells; generating a configuration information element to include the first-cell SSB information; and transmitting the configuration information element to a user equipment in a second cell of the plurality of cells.

Example 7 includes the method of example 6 or some other example herein, wherein the first-cell SSB information includes an indication of a pattern of an SSB transmission of the first cell.

Example 8 includes the method of example 7 or some other example herein, wherein indication of the pattern comprises a bitmap to indicate one or more active SSBs of an SSB burst.

Example 9 includes the method of example 8 or some other example herein, wherein the bitmap comprises 4, 8, or 64 bits.

Example 10 includes the method of example 6 or some other example herein, wherein transmitting the configuration information element comprises transmitting a radio resource control signal (RRC).

Example 11 includes the method of example 6 or some other example herein, wherein the first-cell SSB information includes one or more frequency references to indicate a frequency domain position of an SSB in the first cell.

Example 12 includes the method of example 11 or some other example herein, wherein the one or more frequency references includes a resource block offset to indicate an offset between a common resource block 0 and a common resource block that overlaps with a start of the SSB.

Example 13 includes the method of example 11 or some other example herein, wherein the one or more frequency references includes a pair of absolute radio frequency channel numbers to identify a frequency location of a start of the SSB.

Example 14 includes the method of operating a UE, the method comprising: receiving, from a first transmit-receive point (TRP) that provides a first cell, rate matching configuration element to configure physical downlink shared channel (PDSCH) rate matching in a second cell to be provided by a second TRP; receiving downlink control information to schedule a PDSCH transmission in the second cell; and receiving the PDSCH transmission in the second cell using the PDSCH rate matching.

Example 14 point one includes the method of example 14 or some other example herein, further comprising: determining resource elements are within common resource blocks allocated for a physical transmission in a same cell associated with transmission configuration indicator/quasi-co-location state of the physical transmission.

Example 15 includes the method of example 14 or some other example herein, wherein the rate matching configuration element is a rate match pattern group configuration in a PDSCH configuration information element.

Example 16 includes the method of example 15 or some other example herein, further comprising: determining, from the downlink control information, an indication of a rate matching pattern associated with the rate match pattern group configuration.

Example 17 includes the method of example 14 or some other example herein, wherein the rate matching configuration element is a first rate matching configuration element and the method further comprises: receiving a second rate matching configuration element to configure a PDSCH rate matching in the serving cell.

Example 18 includes the method of example 17 or some other example herein, wherein the PDSCH rate matching in the serving cell is independent from the PDSCH rate matching in the neighbor cell.

Example 19 includes the method of example 17 or some other example herein, wherein the PDSCH rate matching in the serving cell is identical to the PDSCH rate matching in the neighbor cell.

Example 20 includes the method of example 14, further comprising: receiving/transmitting a physical transmission in the neighbor cell based on a scrambling identifier that is a physical cell identifier of the neighbor cell.

Example 21 may include an apparatus comprising means to perform one or more elements of a method described in or related to any of examples 1-20, or any other method or process described herein.

Example 22 may include one or more non-transitory computer-readable media comprising instructions to cause an electronic device, upon execution of the instructions by one or more processors of the electronic device, to perform one or more elements of a method described in or related to any of examples 1-20, or any other method or process described herein.

Example 23 may include an apparatus comprising logic, modules, or circuitry to perform one or more elements of a method described in or related to any of examples 1-20, or any other method or process described herein.

Example 24 may include a method, technique, or process as described in or related to any of examples 1-20, or portions or parts thereof.

Example 25 may include an apparatus comprising: one or more processors and one or more computer-readable media comprising instructions that, when executed by the one or more processors, cause the one or more processors to perform the method, techniques, or process as described in or related to any of examples 1-20, or portions thereof.

Example 26 may include a signal as described in or related to any of examples 1-20, or portions or parts thereof.

Example 27 may include a datagram, information element, packet, frame, segment, PDU, or message as described in or related to any of examples 1-20, or portions or parts thereof, or otherwise described in the present disclosure.

Example 28 may include a signal encoded with data as described in or related to any of examples 1-20, or portions or parts thereof, or otherwise described in the present disclosure.

Example 29 may include a signal encoded with a datagram, IE, packet, frame, segment, PDU, or message as described in or related to any of examples 1-20, or portions or parts thereof, or otherwise described in the present disclosure.

Example 30 may include an electromagnetic signal carrying computer-readable instructions, wherein execution of the computer-readable instructions by one or more processors is to cause the one or more processors to perform the method, techniques, or process as described in or related to any of examples 1-20, or portions thereof.

Example 31 may include a computer program comprising instructions, wherein execution of the program by a processing element is to cause the processing element to carry out the method, techniques, or process as described in or related to any of examples 1-20, or portions thereof.

Example 32 may include a signal in a wireless network as shown and described herein.

Example 33 may include a method of communicating in a wireless network as shown and described herein.

Example 34 may include a system for providing wireless communication as shown and described herein.

Example 35 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments,

Although the embodiments above have been described in considerable detail, numerous variations and modifications will become apparent to those skilled in the art once the above disclosure is fully appreciated. It is intended that the following claims be interpreted to embrace all such variations and modifications.

Aspects of the invention are disclosed in the following numbered clauses:

1. One or more computer-readable media having instructions that, when executed by one or more processors, cause a base station to:

map a first control resource set (CORESET) pool index that is associated with a first CORESET pool to a first serving cell identifier (ID) that is associated with a first serving cell;
map a second CORESET pool index that is associated with a second CORESET pool to a second serving cell ID that is associated with a second serving cell; and
transmit, to a user equipment (UE), a first physical downlink control channel (PDCCH) transmission using resource elements of a first CORESET from the first CORESET pool to schedule a first transmission in the first serving cell or the second serving cell, the first transmission to include a physical downlink shared channel (PDSCH) transmission, a physical uplink shared channel (PUSCH) transmission, a physical uplink control channel (PUCCH) transmission, or an aperiodic channel state information-reference signal (CSI-RS).

2. The one or more computer-readable media of clause 1, wherein the PDCCH transmission is a first PDCCH transmission to schedule the first transmission in the first serving cell; and the instructions, when executed, further cause the base station to:
transmit, to the UE, a second PDCCH transmission using resource elements of a second CORSET from the second CORESET pool to schedule a second transmission in the second serving cell.

3. The one or more computer-readable media of clause 1 or 2, wherein both a first transmission configuration indication (TCI)/quasi-co-location (QCL) state of the first transmission and a second TCI/QCL state of the first PDCCH transmission are associated with the first serving cell.

4. The one or computer-readable media of clause 1 or 2, wherein the PDCCH transmission is to schedule the first transmission in the second serving cell, wherein a first transmission configuration indication (TCI)/quasi-co-location (QCL) state of the first transmission is associated with the second serving cell.

5. The one or more computer-readable media of clause 4, wherein the instructions, when executed, further cause the base station to: receive, from the UE, a capability indication to indicate that the UE is capable of processing cross-cell scheduled downlink transmissions.

6. A base station comprising:

memory to store synchronization signal block (SSB) information corresponding to a plurality of cells provided by a respective plurality of transmit-receive points (TRPs), the SSB information to include first-cell SSB information corresponding to a first cell of the plurality of cells; and

processing circuitry coupled with the memory, the processing circuitry to:

generate a configuration information element to include the first-cell SSB information; and
transmit the configuration information element to a user equipment in a second cell of the plurality of cells.

7. The base station of clause 6, wherein the first-cell SSB information includes an indication of a pattern of an SSB transmission of the first cell.

8. The base station of clause 6 or 7, wherein indication of the pattern comprises a bitmap to indicate one or more active SSBs of an SSB burst.

9 . The base station of clause 8, wherein the bitmap comprises 4, 8, or 64 bits.

10. The base station of any of clauses 6, 7 and 9, wherein to transmit the configuration information element the processing circuitry is to transmit a radio resource control signal (RRC).

11. The base station of any of clauses 6, 7 and 9, wherein the first-cell SSB information includes one or more frequency references to indicate a frequency domain position of an SSB in the first cell.

12. The base station of clause 11, wherein the one or more frequency references includes a resource block offset to indicate an offset between a common resource block 0 and a common resource block that overlaps with a start of the SSB.

13. The base station of clause 11, wherein the one or more frequency references includes a pair of absolute radio frequency channel numbers to identify a frequency location of a start of the SSB.

14. A method of operating a user equipment (UE) comprising:

receiving, from a first transmit-receive point (TRP) that provides a first cell, rate matching configuration element to configure physical downlink shared channel (PDSCH) rate matching in a second cell to be provided by a second TRP;
receiving downlink control information to schedule a PDSCH transmission in the second cell; and
receiving the PDSCH transmission in the second cell using the PDSCH rate matching.

15. The method of clause 14, wherein the rate matching configuration element is a rate match pattern group configuration in a PDSCH configuration information element.

16. The method of clause 15, further comprising: determining, from the downlink control information, an indication of a rate matching pattern associated with the rate match pattern group configuration.

17. The method of any of clauses 14-16, wherein the rate matching configuration element is a first rate matching configuration element and the method further comprises:
receiving a second rate matching configuration element to configure a PDSCH rate matching in the serving cell.

18. The method of clause 17, wherein the PDSCH rate matching in the serving cell is independent from the PDSCH rate matching in the neighbor cell.

19. The method of clause 17, wherein the PDSCH rate matching in the serving cell is identical to the PDSCH rate matching in the neighbor cell.

20. The method of any of clauses 14-16 and 18-19, further comprising:
receiving/transmitting a physical transmission in the neighbor cell based on a scrambling identifier that is a physical cell identifier of the neighbor cell.

21. The method of any of clauses 14-16 and 18-19, further comprising:
determining resource elements are within common resource blocks allocated for a physical transmission in a same cell associated with transmission configuration indicator/quasi-co-location state of the physical transmission.

**Claims**

1. A method comprising:

   mapping a first control resource set, CORESET, pool index that is associated with a first CORESET pool to a first serving cell identifier, ID, that is associated with a first serving cell;
   mapping a second CORESET pool index that is associated with a second CORESET pool to a second serving cell ID that is associated with a second serving cell; and
   generating, for a user equipment, UE,, a physical downlink control channel, PDCCH, transmission using resource elements of a first CORESET from the first CORESET pool to schedule a first transmission in the first serving cell or the second serving cell, the first transmission to include a physical downlink shared channel, PDSCH, transmission, a physical uplink shared channel, PUSCH, transmission, a physical uplink control channel, PUCCH, transmission, or an aperiodic channel state information-reference signal, CSI-RS.

2. The method of claim 1, wherein a first set of transmission configuration indicator, TCI, states are activated for the first serving cell, a second set of TCI states are activated for the second serving cell, and the method further comprises:
associating CORESETs from the first CORESET pool with TCI states from the first set of TCI states.

3. The method of claim 2, further comprising:
associating CORESETs from the second CORESET pool with TCI states from the second set of TCI states.

4. The method of claim 2 or 3, wherein no TCI states of the first set of TCI states are included in the second set of TCI states.

5. The method of claim 1, wherein both a first transmission configuration indication, TCI,/quasi-co-location, QCL, state of the first transmission and a second TCI/QCL state of the PDCCH transmission are associated with the first serving cell.

6. The method of claim 1, wherein the PDCCH transmission is to schedule the first transmission in the second serving cell, a first transmission configuration indication, TCI,/quasi-co-location, QCL, state of the first transmission is associated with the second serving cell, and the method further comprises:
receiving, from the UE, a capability indication to indicate that the UE is capable of processing cross-cell scheduled downlink transmissions.

7. The method of claim 1, further comprising:

   generating configuration information to configure the UE for inter-cell, multi-transmit receive point, TRP, operation and provide synchronization signal block, SSB, information corresponding to the second serving cell; and
   generating a signal that includes the configuration information, the signal to be transmitted to the UE in the first serving cell.

8. One or more computer-readable media having instructions that, when executed, cause processing circuitry to:

   map a first control resource set, CORESET, pool index that is associated with a first CORESET pool to a first serving cell identifier, ID, that is associated with a first serving cell;
   map a second CORESET pool index that is associated with a second CORESET pool to a second serving cell ID that is associated with a second serving cell; and
   generate, for a user equipment, UE, a first physical downlink control channel, PDCCH, transmission using resource elements of a first CORESET from the first CORESET pool to schedule a first transmission in the first serving cell or the second serving cell, the first transmission to include a physical downlink shared channel, PDSCH, transmission, a physical uplink shared channel PUSCH, transmission, a physical uplink control channel, PUCCH, transmission, or an aperiodic channel state information-reference signal, CSI-RS.

9. The one or more computer-readable media of claim 8, wherein a first set of transmission configuration indicator, TCI, states are activated for the first serving cell, a second set of TCI states are activated for the second serving cell, and the instructions, when executed, further cause the processing circuitry to:
associate CORESETs from the first CORESET pool with TCI states from the first set of TCI states.

10. The one or more computer-readable media of claim 9, wherein the instructions, when executed, further cause the processing circuitry to:
associate CORESETs from the second CORESET pool with TCI states from the second set of TCI states.

11. The one or more computer-readable media of claim 9 or 10, wherein no TCI states of the first set of TCI states are included in the second set of TCI states.

12. The one or more computer-readable media of claim 8, wherein both a first transmission configuration indication, TCI,/quasi-co-location, QCL, state of the first transmission and a second TCI/QCL state of the PDCCH transmission are associated with the first serving cell.

13. An apparatus comprising circuitry to:

process a physical downlink control channel, PDCCH, transmission using resource elements of a first control resource set, CORESET, from a first CORESET pool, the PDCCH transmission to schedule a first transmission in a first serving cell associated with the first CORESET pool or a second serving cell associated with a second CORESET pool; and
process signaling that associates CORESETS from the first CORESET pool with transmission configuration indicator, TCI, states from a first set of TCI states;
process signaling that associates CORESETS from the second CORESET pool with TCI states from a second set of TCI states; and
process the first transmission, wherein the first transmission includes a physical downlink shared channel, PDSCH, transmission, a physical uplink shared channel, PUSCH, transmission, a physical uplink control channel, PUCCH, transmission, or an aperiodic channel state information-reference signal, CSI-RS.

14. The apparatus of claim 13, wherein no TCI states of the first set of TCI states are included in the second set of TCI states.

15. The apparatus of claim 13 or 14, wherein the first set of TCI states is for the first serving cell and the second set of TCI states is for the second serving cell.

EP 4 436 086 A2

100

Backhaul
124

TRP
116

Base station
108

TRP
112

104

Backhaul
128

Cell 1

Cell 2

Cell 3

TRP
120

Figure 1

Figure 2

Figure 3

Signal pattern (cell 1)
404

Signal pattern (cell 2)
408

PDSCH

SSB Cell 1 — 412
SSB Cell 1 — 416

SSB Cell 2 — 420
SSB Cell 2 — 424

1 slot

Figure 4

500

Mapping first CORESET pool index to first serving cell ID
504

Mapping second CORESET pool index to second serving cell ID
508

Transmitting PDCCH transmissions using resource elements of CORESETs associated with the first/second CORESET pool indices to schedule PDSCH transmissions in cells of a multi-TRP environment
512

Figure 5

600

Storing SSB information corresponding to cells provided by respective
TRPs
604

Generating configuration information element to include the first-cell
SSB information corresponding to a first cell
608

Transmitting the configuration information element to a user
equipment in a second cell
612

Figure 6

700

Receiving rate matching configuration element to configure PDSCH rate matching for one or more cells
704

Receiving DCI to schedule PDSCH transmission
708

Receiving the PDSCH transmission
712

Figure 7

Figure 8

Figure 9

EP 4 436 086 A2

## REFERENCES CITED IN THE DESCRIPTION

**Non-patent literature cited in the description**

- *3GPP TS 38.211 v16.3.0,* 01 October 2020
- *3GPP TS 38.211 v16.3.0,* September 2020